# EUROPÄISCHE PATENTSCHRIFT

(11) **EP 2 665 951 B1**
(45) Veröffentlichungstag und Bekanntmachung des Hinweises auf die Patenterteilung: **25.03.2015**
(21) Anmeldenummer: 12703987.3
(22) Anmeldetag: 23.01.2012
(51) Int. Cl.: F16J 9/06, F16J 9/20

(54) **ÖLABSTREIFRING**
OIL SCRAPING RING
BAGUE D'ETALEMENT D'HUILE

(30) Priorität: 21.01.2011 EP 11151750
(43) Veröffentlichungstag der Anmeldung: 27.11.2013
(73) Patentinhaber: Burckhardt Compression AG, 8404 Winterthur (CH)
(72) Erfinder: FEISTEL, Norbert, CH-8548 Ellikon a.d. Thur (CH)
(74) Vertreter: Dr. Graf & Partner AG
(86) Internationale Anmeldenummer: PCT/EP2012/050993
(87) Internationale Veröffentlichungsnummer: WO 2012/098267

(56) Entgegenhaltungen:
- WO-A1-97/00396
- WO-A1-03/044400
- DE-A1- 19 630 745
- "Polymer Inserts - Provisional design components for poly sys piston Rod scraper & seal system Design principles support holder cast or moulded to suit engine type - projected two lip scraper/seal -triple lip projection", ORIGINAL CONCEPT MARINE SEALING SERVICES, XX, XX, 7. März 2001 (2001-03-07), Seiten 1-8, XP002989981,

## Beschreibung

### Beschreibung

Die Erfindung betrifft einen Ölabstreifring gemäss dem Oberbegriff von Anspruch 1, und wie er aus der WO 97/00396A bekannt ist.

### Stand der Technik

Das Dokument EP 1446597B1 offenbart einen Ölabstreifring, der insbesondere als Ölbarriere für Kolbenstangen von Schiffsdieselmotoren verwendet wird. Der Ölabstreifring weist zur Kolbenstangenseite hin gerichtete Ölabstreiflamellen aus Kunststoff auf, die das auf der Kolbenstange befindliche Öl abstreift und zum Beispiel wieder einem Kurbelgehäuse zuführt. Dieser bekannte Ölabstreifring weist den Nachteil auf, dass das Abstreifen nicht sehr effizient ist, beziehungsweise, dass das Öl den Ölabstreifring überwinden kann.

### Darstellung der Erfindung

Aufgabe der Erfindung ist es einen vorteilhafteren Ölabstreifring auszubilden, der während einer langen Betriebsdauer ein zuverlässiges Ölabstreifen gewährleistet. Die Aufgabe wird gelöst mit einem Ölabstreifring ausweisend die Merkmale von Anspruch 1. Die Unteransprüche 2 bis 12 betreffen weitere vorteilhafte Ausgestaltungen. Die Aufgabe wird weiter gelöst mit einer Ölabstreifpackung aufweisend die Merkmale von Anspruch 13. Der Unteranspruch 14 betrifft eine weitere vorteilhafte Ausgestaltung.

Die Aufgabe wird insbesondere gelöst mit einem Ölabstreifring der sich in einer Umfangsrichtung um ein Zentrum erstreckt und eine durch das Zentrum verlaufende Längsachse aufweist, wobei der Ölabstreifring eine gegen das Zentrum hin ausgerichtete Stirnfläche aufweist, und wobei der Ölabstreifring eine erste Seitenfläche, eine zweite Seitenflächen sowie eine bezüglich dem Zentrum abgewandte Aussenfläche aufweist, wobei der Ölabstreifring an der ersten Seitenflächen eine Mehrzahl von zum Zentrum hin verlaufenden Kanälen aufweist, welche in Umfangsrichtung gegenseitig beabstandet sind, und welche sich in radialer Richtung über die gesamte Breite der ersten Seitenfläche erstrecken und dadurch eine Fluid leitende Verbindung zwischen der Stirnfläche und der Aussenfläche ausbilden, und wobei jeweils zwischen zwei Kanälen ein sich in Umfangsrichtung erstreckendes Kronenteil angeordnet ist, wobei das Kronenteil in Verlaufsrichtung der Längsachse jeweils über den Kanal vorsteht und dabei für den Kanal eine Kanalseitenfläche ausbildet, dadurch gekennzeichnet dass, zumindest eines der Kronenteile als langes Kronenteil ausgestaltet ist und sich in Umfangsrichtung über einen Winkelbereich α zwischen 60 Grad und 350 Grad erstreckt.

Das lange Kronenteil ist vorzugsweise derart ausgestaltet, dass das lange Kronenteil in radialer Richtung keinen Durchlass aufweist. Der erfindungsgemässe Ölabstreifring wird vorzugsweise in Verbindung mit einer Ölabstreifringpackung verwendet, vorzugsweise zum Abdichten einer horizontal verlaufenden Kolbenstange. In der Ölabstreifringpackung sind zumindest zwei Ölabstreifringe nebeneinander liegend angeordnet, wobei die langen Kronenteile oberhalb der Kolbenstange angeordnet sind, vorteilhafterweise derart, dass alle Ölabstreifringe bezüglich der Kolbenstange gleich positioniert sind, wobei sich die Ölabstreifringe gegenseitig berühren. Die oberhalb der Kolbenstange angeordneten, langen Kronenteile haben zur Folge, dass das von den Ölabstreifringen von der Kolbenstange abgestreifte Öl nicht nach oben aus der Ölabstreifringpackung entweichen kann, und somit der Schwerkraft folgend nur nach unten und gegebenenfalls seitlich entweichen kann. Diese Ausgestaltung weist den Vorteil auf, dass das Öl insgesamt besser von der Kolbenstange abgestreift werden kann, beziehungsweise weist den Vorteil auf, dass weniger Öl die Ölabstreifringpackung überwinden kann.

Die Aufgabe wird zudem insbesondere gelöst mit einem Ölabstreifring umfassend einen Haltering sowie umfassend einen Abstreifer mit einer Abstreiferlamelle, wobei der Abstreifer derart im Haltering angeordnet ist, dass die Abstreiferlamelle gegen das Zentrum des Ölabstreifrings hin ausgerichtet ist, um Öl an einer Kolbenstange abzustreifen, wobei der Abstreifer aus einer Mehrzahl von Abstreifersegmenten besteht welche in Umfangsrichtung des Ölabstreifrings nacheinander folgend angeordnet sind, und wobei der Haltering eine Nut zur formschlüssigen Aufnahme der Abstreifersegmente aufweist, und wobei der Haltering eine Stossstelle aufweist, und wobei der Haltering zumindest eine zum Zentrum des Ölabstreifrings hin ausgerichtete erste Stirnfläche aus Kunststoff ausbildet, und wobei der Abstreifer aus einem Material mit grösserer Härte als den die erste Stirnfläche ausbildenden Kunststoff besteht, wobei die Abstreiflamelle des Abstreifers eine zum Zentrum hin ausgerichtete Berührungsstelle aufweist, und wobei der Abstreifer und der Haltering derart gegenseitig angepasst ausgestaltet sind, dass sowohl die zumindest erste Stirnfläche als auch die Berührungsstelle an der Kolbenstange anliegen können.

Der erfindungsgemässe Ölabstreifring weist den Vorteil auf, dass dieser ein weitgehendes und effizientes Abstreifen des sich an der Kolbenstange befindlichen Öls ermöglicht, und dass der Ölabstreifring nur einen geringen Verschleiss aufweist. Der erfindungsgemässe Ölabstreifring umfasst in einer vorteilhaften Ausgestaltung einen Abstreifer, der eine grössere Härte aufweist als das Material des Halterings, welches die erste Stirnfläche ausbildet, die zur Anlage an der Kolbenstange bestimmt ist. Ein derartiger Abstreifer weist eine stabile und vorzugsweise auch scharfe Abstreifkante auf, was ein effizientes Abstreifen des Öls gewährleistet. Zudem umfasst der erfindungsgemässe Ölabstreifring einen Haltering, der eine aus Kunststoff gebildete erste Stirnfläche aufweist, welche zur Kolbenstange hin ausgerichtet ist und welche zur Anlage an der Kolbenstange bestimmt ist. Der erfindungsgemässe Ölabstreifring ist in einer vorteilhaften Ausführungsform derart ausgestaltet, dass sowohl die erste Stirnfläche als auch Abstreifkante gleichzeitig an der Kolbenstange anliegen können, was zur Folge hat, dass die Abstreifkante mit nur sehr geringem Druck oder ohne Druck an der Kolbenstange anliegen kann, da ein Teil der insbesondere radial nach innen wirkenden Kräfte über die erste Stirnfläche übertragen wird. Die Abstreifkante erfährt dadurch einen sehr geringen Verschleiss. Zudem wird die Lage und Ausrichtung der Abstreifkante bezüglich der Kolbenstange durch die an der Kolbenstange anliegenden Stirnfläche des Halterings stabilisiert, und insbesondere auch bezüglich allfällig auftretender Bewegungen stabilisiert. In einer besonders vorteilhaften Ausgestaltung besteht das die erste Stirnfläche ausbildende Material aus einem Kunststoff mit guten Trockenlaufeigenschaften wie gefülltes PTFE oder ein Hochtemperaturpolymer modifiziert mit für den Trockenlauf geeigneten Füllstoffen wie PTFE, MoS2, Graphit usw. Der Abstreifer oder der gesamte Ölabstreifring, mit oder ohne Abstreifer, besteht vorzugsweise aus einem Metall wie Grauguss, Bronze, Messing und Aluminium, oder aus einem Kunststoff, insbesondere aus einem Hochtemperaturpolymer wie PEEK, Polyimid oder PPS.

Der Abstreifer besteht aus einer Mehrzahl von Abstreifersegmenten. Der Haltering kann einstückig ausgestaltet sein, oder aus einer Mehrzahl von Halteringsegmenten gebildet sein. Der Haltering sowie der Abstreifring sind vorzugsweise derart gegenseitig angepasst ausgestaltet, dass die Lamelle des Abstreifrings zumindest teilweise am Haltering anliegt, sodass die Lamelle vor einer übermässigen Belastung geschützt ist, da eine am Abstreifring beziehungsweise an der Lamelle angreifende Kraft unmittelbar auf den Haltering übertragen wird.

Der erfindungsgemässe Ölabstreifring ist insbesondere für trocken laufenden Kompressoren besonders gut geeignet, da bei einem trocken laufenden Verdichter die Kontaminierung des zu verdichtenden Gases mit Schmieröl sicher vermieden werden muss. Darüber hinaus können bereits geringe Ölleckagen, die in ein trocken laufendes Kolbenstangen-Dichtsystem eindringen, dessen rasche Zerstörung bewirken. Besonders wichtig ist die zuverlässige Funktion des Ölabstreifsystems bei der Verdichtung von Sauerstoff. Hier kann es durch Ölleckagen gar zu einem Brand kommen. Aber auch wenn keine akute Gefahr aus der Ölleckage droht, führt dies zumindest zu erhöhten Betriebskosten sowie zu einer Umweltbelastung, da das aus dem Kurbeltrieb verlorenen Schmieröl kontinuierlich ersetzt und das Leckageöl entsorgt werden muss.

Der erfindungsgemässe Ölabstreifring wird vorzugsweise in einer Ölabstreifringpackung umfassend eine Mehrzahl von in Verlaufsrichtung einer Kolbenstange hintereinander angeordneten Ölabstreifringe verwendet.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: eine perspektivische Ansicht eines ersten Ausführungsbeispiels eines Ölabstreifring ;
- Fig. 2: eine Draufsicht auf den Ölabstreifring gemäss Figur 1;
- Fig. 3: einen Schnitt durch eine horizontal angeordnete Packung umfassend eine Mehrzahl von nacheinander angeordneten Ölabstreifringen, wobei zwei dargestellt sind;
- Fig. 4: eine Draufsicht auf ein weiteres Ausführungsbeispiel eines Ölabstreifrings;
- Fig. 5: einen Schnitt durch eine horizontal angeordnete Packung umfassend drei nacheinander angeordnete, wie in Figur 4 dargestellte Ölabstreifringe;
- Fig. 6: eine Draufsicht auf ein weiteres Ausführungsbeispiel eines Ölabstreifrings;
- Fig. 7: eine perspektivische Ansicht eines weiteres Ausführungsbeispiels eines Ölabstreifrings;
- Fig. 8: einen Querschnitt durch den in Figur 7 dargestellten Ölabstreifring;
- Fig. 9: einen Querschnitt durch ein weiteres Ausführungsbeispiel eines Ölabstreifrings;
- Fig. 10: einen Querschnitt durch den Ölabstreifring entlang der Schnittlinie C-C;
- Fig. 11: eine Ansicht von unten auf den Ölabstreifring gemäss Figur 9;
- Fig. 12: einen Querschnitt durch ein Halteringsegment entlang der Schnittlinie D-D;
- Fig. 13: eine Draufsicht auf das Halteringsegment;
- Fig. 14: einen Querschnitt durch einen Abstreifer entlang der Schnittlinie C-C;
- Fig. 15: eine perspektivische Ansicht eines Abstreifers;
- Fig. 16: eine horizontal angeordnete Packung umfassend drei nacheinander angeordnete Ölabstreifringe;
- Fig. 17: eine Frontansicht eines der in Figur 16 dargestellten Ölabstreifringe aus Richtung B;
- Fig. 18: einen Querschnitt durch ein weiteres Ausführungsbeispiel eines Ölabstreifrings
- Fig. 19: eine Draufsicht auf einen weiteren, einstückigen Ölabstreiferring.

Grundsätzlich sind in den Zeichnungen gleiche Teile mit gleichen Bezugszeichen versehen.

### Wege zur Ausführung der Erfindung

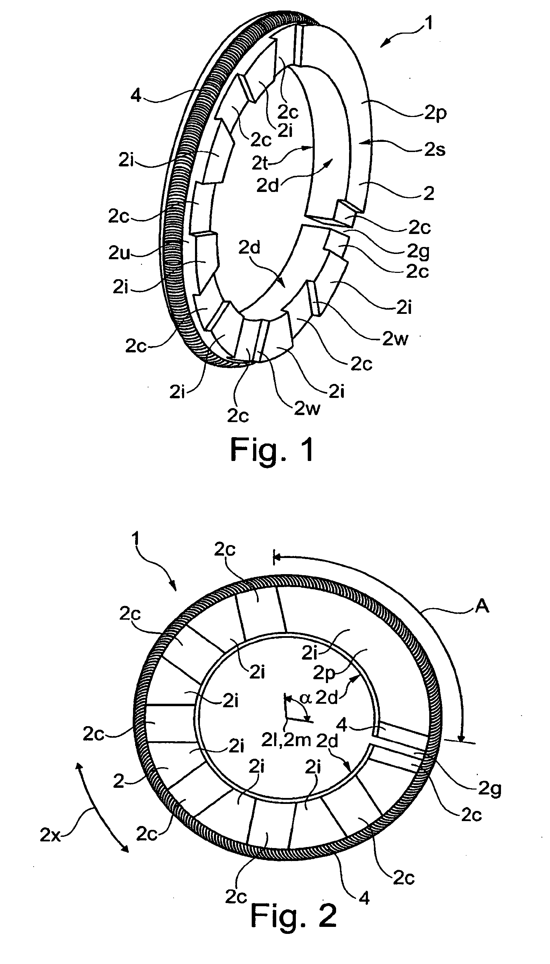

Figur 1 zeigt in einer perspektivischen Ansicht und Figur 2 in einer Draufsicht einen Ölabstreifring 2 der sich in einer Umfangsrichtung 2x um ein Zentrum 21 erstreckt und eine durch das Zentrum 21 verlaufende Längsachse 2m aufweist, wobei der Ölabstreifring 2 eine gegen das Zentrum 21 hin ausgerichtete Stirnfläche 2d aufweist, und wobei der Ölabstreifring 2 eine erste Seitenfläche 2s, eine zweite Seitenflächen 2t sowie eine bezüglich dem Zentrum 21 abgewandte Aussenfläche 2u aufweist. Der Ölabstreifring 2 weist an der ersten Seitenflächen 2s eine Mehrzahl von zum Zentrum 21 hin verlaufende Kanäle 2c auf, welche in Umfangsrichtung 2x gegenseitig beabstandet sind, und welche sich in radialer Richtung über die gesamte Breite der ersten Seitenfläche 2s erstrecken und dadurch eine Fluid leitende Verbindung zwischen der Stirnfläche 2d und der Aussenfläche 2u ausbilden. Zwischen jeweils zwei Kanälen (2c) ist ein sich in Umfangsrichtung 2x erstreckendes Kronenteil 2i angeordnet, wobei das Kronenteil 2i in Verlaufsrichtung der Längsachse 2m jeweils über den Kanal 2c vorsteht und dabei für den Kanal 2c eine Kanalseitenfläche 2w ausbildet. Zumindest eines der Kronenteile 5i ist als ein langes Kronenteil 2p ausgestaltet und erstreckt sich in Umfangsrichtung 2x über einen Winkelbereich α zwischen 60 Grad und 350 Grad. Der Ölabstreifring 2 weist zudem einen Spalt 2g auf, welche im dargestellten Ausführungsbeispiel in einem Kanal 2c angeordnet ist. Die Ölabstreifanordnung 1 umfasst einen Ölabstreifring 2 sowie ein den Ölabstreifring 2 entlang der Aussenfläche 2u in einer Vertiefung 2k aufliegenden, den Ölabstreifring 2 umschliessendes Spannelement 4.

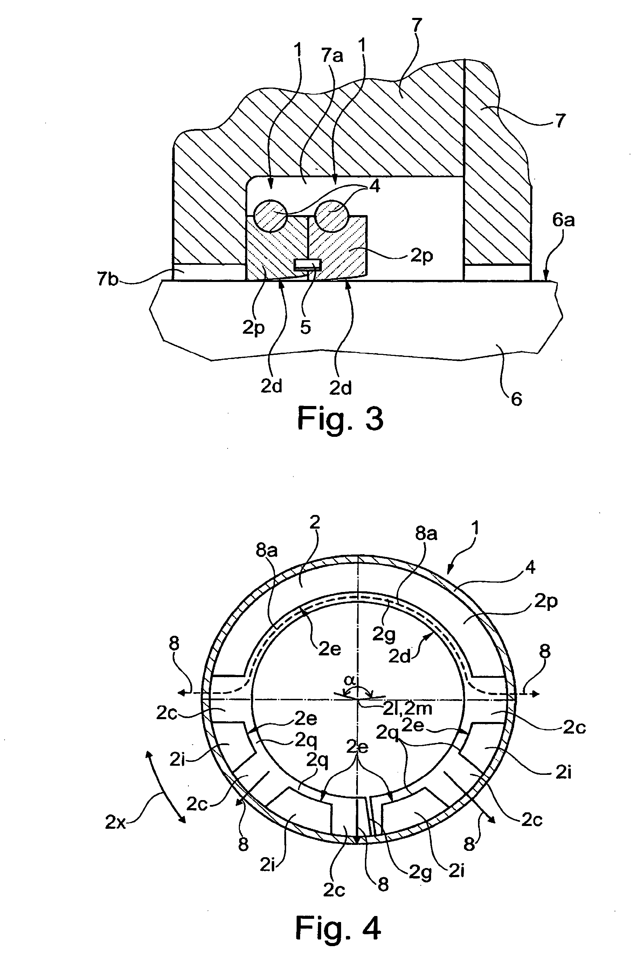

Figur 3 zeigt eine horizontal verlaufende Ölabstreifringpackung wobei zwei in Verlaufsrichtung der Kolbenstange 6 nacheinander folgend angeordnete Ölabstreifringe 2 dargestellt sind. Die langen Kronenteile 2p sind oben und in Verlaufsrichtung der Kolbenstange 6 aneinander liegend angeordnet. Die langen Kronenteile 2p bilden dadurch gegen oben eine Barriere um zu verhindern, dass an der Stirnfläche 2d von der Kolbenstange 6 abgestreiftes Öl unmittelbar in den oberen Innenraum 7a des Gehäuses 7 gelangen kann. Vorteilhafterweise ist zudem eine Verdrehsicherung 5 wie ein Stift vorgesehen, um ein gegenseitiges Verdrehen der Ölabstreifringe 2 zu verhindern. Vorteilhafterweise sind alle langen Kronenteile 2p bezüglich der Kolbenstange 6 in identischer Lage angeordnet.

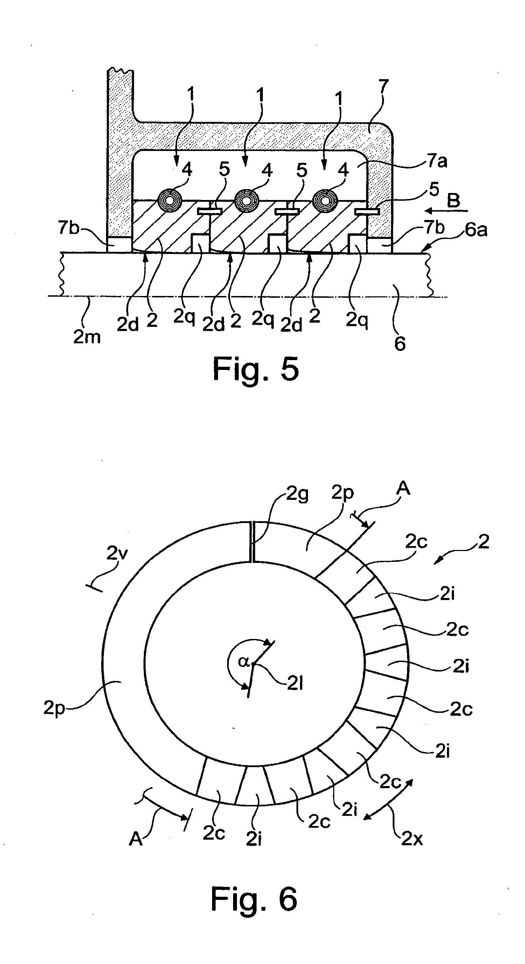

Figur 5 zeigt eine horizontal verlaufende Ölabstreifringpackung umfassend drei in Verlaufsrichtung der Kolbenstange 6 nacheinander folgend angeordnete Ölabstreifringe 2. Figur 4 zeigt eine Frontansicht aus Richtung B eines der in Figur 5 angeordneten Ölabstreifringe 2. Wie in Figur 4 dargestellt ist die zweite Stirnfläche 2e bezüglich der Stirnfläche 2d in radialer Richtung zurückversetzt angeordnet, sodass sich zwischen dem langen Kronenteil 2p und der Oberfläche 6a der Kolbenstange 6 ein Zwischenraum 2q ausbildet. Die erste Stirnfläche 2d liegt wie in Figur 5 dargestellt zumindest teilweise an der Oberfläche 6a der Kolbenstange 6 an, sodass Öl abgestreift wird, welches, wie mit dem Fluidstrom 8 dargestellt, über die Kanäle 2c nach Aussen entweicht. Die Kanäle 2c sind unten in Umfangsrichtung 2x vorzugsweise mindestens entlang eines Winkelbereichs von 60 Grad angeordnet, wobei zwischen zwei Kanälen 2c je ein Kronenteil 2i angeordnet ist. Vorteilhafterweise weist jeder Kanal 2c in Umfangsrichtung 2x eine Breite entsprechend einem Winkelbereich von mindestens 10 Grad auf, sodass sich jeder Kanal 2c in Umfangsrichtung 2x über einen Winkelbereich von mindestens 10 Grad erstreckt. Oben ist zwischen dem links und rechts angeordneten Kanal 2c ein im dargestellten Ausführungsbeispiel im Wesentlichen halbkreisförmiges, langes Kronenteil 2p angeordnet, welches sich je nach Ausführungsform über einen Winkelbereich von mindestens 60 Grad erstreckt. Das lange Kronenteil 2p ist in Umfangsrichtung derart durchgehend ausgestaltet ist, dass das Kronenteil 2p keinen Durchlass aufweist. Diese Ausgestaltung weist den Vorteil auf, dass das abgestreifte Öl, wie mit dem Fluidstrom 8 dargestellt, nur nach unten entweichen kann, da der Ölabstreifring 2 gegen oben keinen durchgehenden Kanal 2c in radialer Richtung aufweist. In einer besonders vorteilhaften Ausgestaltung weisen benachbart angeordnete Ölabstreifringe 2 wie in Figur 5 dargestellt eine Verdrehsicherung auf, beispielsweise einen Fixierstift 5, um ein gegenseitiges Verdrehen der Ölabstreifringe 2 zu verhindern und um vorzugsweise auch ein Verdrehen der Ölabstreifringe 2 gegenüber dem Gehäuse 7 zu verhindern.

Figur 6 zeigt in einer Draufsicht ein weiteres Ausführungsbeispiel eines Ölabstreifrings 2 mit einem langen Kronenteil 2p und mit einer Mehrzahl von in Umfangsrichtung 2x angeordneten Kanälen 2c und Kronenteilen 2i. Das lange Kronenteil 2p erstreckt sich über einen Winkel α von mehr als 180 Grad, wobei der radiale Spalt 2g im langen Kronenteil 2p verläuft. Der Ölabstreifring 2 wird vorteilhafterweise derart in einer Ölabstreifringpackung angeordnet, dass die mit 2v bezeichnete Stelle oben angeordnet ist, sodass das Kronenteil 2p sich, ausgehend von der Stelle 2v, über einen Winkelbereich von zumindest 30 Grad in beiden Umfangsrichtungen erstreckt.

Die in den Figuren 1 bis 5 dargestellten Ölabstreifringe 2 sind vorzugsweise aus einem Kunststoff gefertigt.

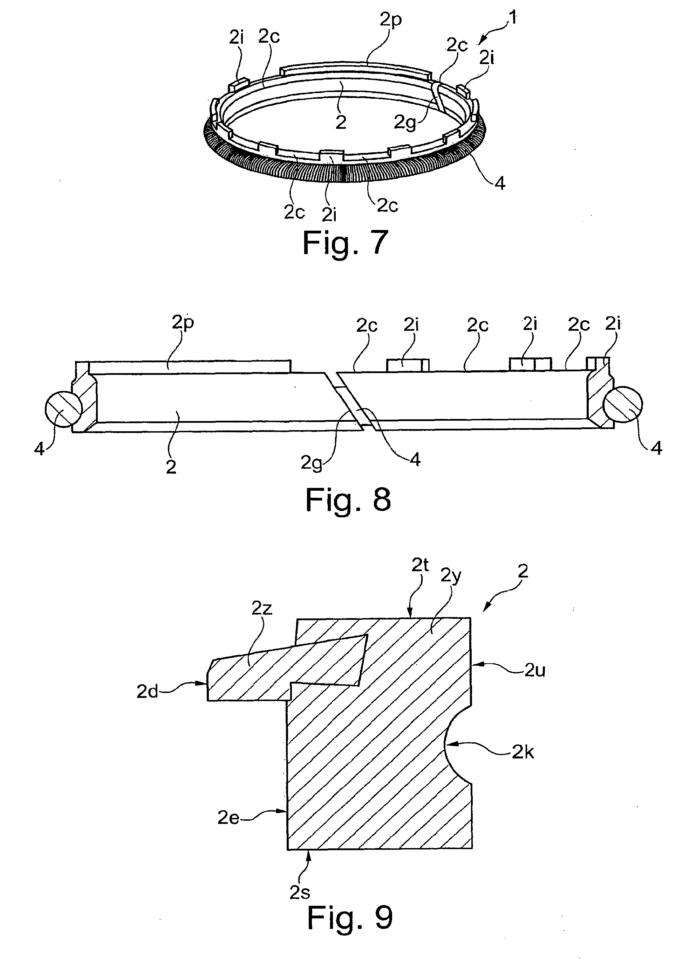

Figur 7 zeigt in einer perspektivischen Ansicht und Figur 8 in einem Schnitt ein weiteres Ausführungsbeispiel eines Ölabstreifrings 2, der von einem Spannelement 4 umgeben ist. Dieser Ölabstreifring 2 ist aus Metall gefertigt, vorzugsweise aus Messing. Der Ölabstreifring 2 weist wiederum ein langes Kronenteil 2p auf und in Umfangsrichtung 2x eine Mehrzahl von Kanälen 2c und Kronenteile 2i. Die Stossstelle 2g ist im dargestellten Ausführungsbeispiel schrägt verlaufend ausgestaltet, wobei hinter der Stossstelle 2g noch ein Teil des Spannelementes 4 sichtbar ist.

Figur 9 zeigt in einem Schnitt ein weiteres Ausführungsbeispiel eines Ölabstreifrings 2. Der Ölabstreifring 2 besteht aus zumindest einem ersten Ringteil 2y und einem zweiten Ringteil 2z, wobei das erste und zweite Ringteil 2y,2z miteinander verbunden sind, vorzugsweise fest miteinander verbunden sind, wobei das zweite Ringteil 2z zwischen dem Zentrum 21 und dem ersten Ringteil 2y angeordnet ist, und wobei das zweite Ringteil 2z vorzugsweise aus einem Kunststoff besteht, und wobei das zweite Ringteil 2z die Stirnfläche 2d ausbildet. Das erste Ringteil 2y kann aus einem Kunststoff oder auch aus Metall gebildet sein. Die zweite Stirnfläche 2e ist bezüglich der ersten Stirnfläche 2d zurückversetzt angeordnet, sodass nur die erste Stirnfläche 2d an der Oberfläche 6a der Kolbenstange 6 anliegt.

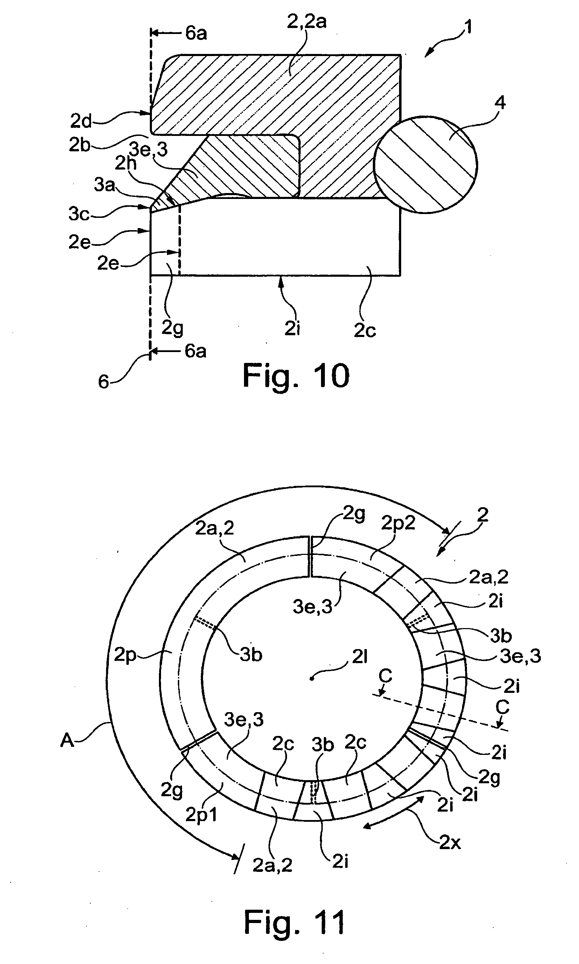

Fig. 10 zeigt einen Ölabstreifring 2 mit Spannelement 4 entlang der in Figur 11 dargestellten Schnittlinie C-C. Figur 11 zeigt denselben Ölabstreifring 1 in einer Ansicht von unten. Wie aus Figur 11 ersichtlich besteht der Ölabstreifring 2 aus drei in Umfangsrichtung 2x nacheinander folgend angeordneten Halteringsegmenten 2a, wobei sich zwischen den Halteringsegmenten 2a jeweils eine radial verlaufende Stossstelle 2g befindet. Der Ölabstreifring 2 könnte auch nur aus zwei Halteringsegmenten 2a oder auch aus mehr als drei Halteringsegmenten 2a bestehen. Der Ölabstreifring 2 weist in Umfangsrichtung 2x beabstandet angeordnete Kronenteile 2i auf, zwischen welchen jeweils ein in radialer Richtung zum Zentrum 21 des Ölabsteifrings 2 hin verlaufender Kanal 2c angeordnet ist. Im Ölabstreifring 2 ist ein Abstreifer 3 angeordnet, welcher im dargestellten Ausführungsbeispiel aus drei in Umfangsrichtung nacheinander angeordneten Abstreifringsegmenten 3e besteht, wobei sich zwischen den Abstreifringsegmenten 3e jeweils eine radial verlaufende Stossstelle 3b befindet. Der Abstreifer 3 könnte auch nur aus zwei Abstreifsegmenten 3e oder auch aus mehr als drei Abstreifsegmenten 3e bestehen. Im montierten Zustand umfasst der Ölabstreifring 2 zudem, wie nur in Figur 1 dargestellt, ein Spannelement 4 wie eine Feder, welche den Ölabstreifring 2 von Aussen umschliesst, und eine gegen das Zentrum 21 hin wirkende Vorspannkraft auf den Ölabstreifring 2 beziehungsweise den Abstreifer 3 bewirkt.

Figur 10 zeigt den Ölabstreifring 2 beziehungsweise ein Halteringsegment 2a, das eine umlaufende Nut 2b aufweist, in welcher der Abstreifer 3 beziehungsweise das Abstreifringsegment 3e angeordnet ist. Der Abstreifer 3 weist eine Abstreiferlamelle 3a auf, welche an deren Spitze eine Berührungsstelle 3c aufweist. Der Abstreifer 3 besteht vorzugsweise aus einem Metall wie Grauguss, Bronze, Messing und Aluminium oder einem Hochtemperaturpolymer wie PEEK, Polyimid oder PPS. Der Abstreifer 3 besteht aus einem Material mit grösserer Härte als der die erste Stirnfläche 2d,2e ausbildende Kunststoff des Ölabstreifrings 2. Der Abstreifer 3 ist derart im Ölabstreifring 2 angeordnet, dass die Abstreiferlamelle 3a sowie die Berührungsstelle 3c gegen das Zentrum 21 des Ölabstreifrings 2 hin ausgerichtet ist, um Öl von einer nur andeutungsweise dargestellten Oberfläche 6a einer Kolbenstange 6 abzustreifen. Die Nut 2b des Ölabstreifrings 2 ist vorteilhafter derart bezüglich dem Abstreifersegment 3a angepasst ausgestaltet, dass die Nut 2b eine formschlüssige Aufnahme des Abstreifersegmentes 3a erlaubt. Der Ölabstreifring 2 weist zumindest eine zum Zentrum 21 des Ölabstreifrings 1 hin ausgerichtete Stirnfläche 2d, 2e aus Kunststoff auf. Der Abstreifer 3 und der Ölabstreifring 2 sind derart gegenseitig angepasst ausgestaltet, dass sowohl die zumindest erste Stirnfläche 2d als auch die Berührungsstelle 3c gleichzeitig an der Kolbenstange 6 anliegen können. In einer vorteilhaften Ausgestaltung weist der Ölabstreifring 2 eine erste und eine zweite Stirnfläche 2d,2e auf, welche beide gleich weit in Richtung zum Zentrum 21 des Ölabstreifrings 1 hin vorstehen, sodass beide Stirnflächen 2d,2e an der Oberfläche 6a der Kolbenstange 6 anliegen können. In einer besonders vorteilhaften Ausgestaltung ist das die erste Stirnfläche 2d ausbildende Material ein Material mit guten Trockenlaufeigenschaften wie gefülltes PTFE oder ein Hochtemperaturpolymer modifiziert mit für den Trockenlauf geeigneten Füllstoffen wie PTFE, MoS2, Graphit usw. Die erste und zweite Stirnfläche 2d,2e sind über eine in Umfangsrichtung 2x verlaufende Nut 2b gegenseitig getrennt. Figur 10 zeigt zudem einen in radialer Richtung verlaufenden Kanal 2c, welcher seitlich durch das Kronenteil 2i begrenzt ist. Der Ölabstreifring 2 weist ein langes Kronenteil 2p auf, welches sich im dargestellten Ausführungsbeispiel über drei Segmente und über eine Winkel bzw. eine Länge A von mehr als 180 Grad erstreckt.

In einer weiteren Ausführungsform könnte die zweite Stirnfläche 2e, wie in Figur 1 strichliert dargestellt und auch mit 2e bezeichnet, zurückversetzt angeordnet sein, sodass sich zwischen dieser zweiten Stirnfläche 2e und der Oberfläche 6a ein Zwischenraum 2q ausbildet.

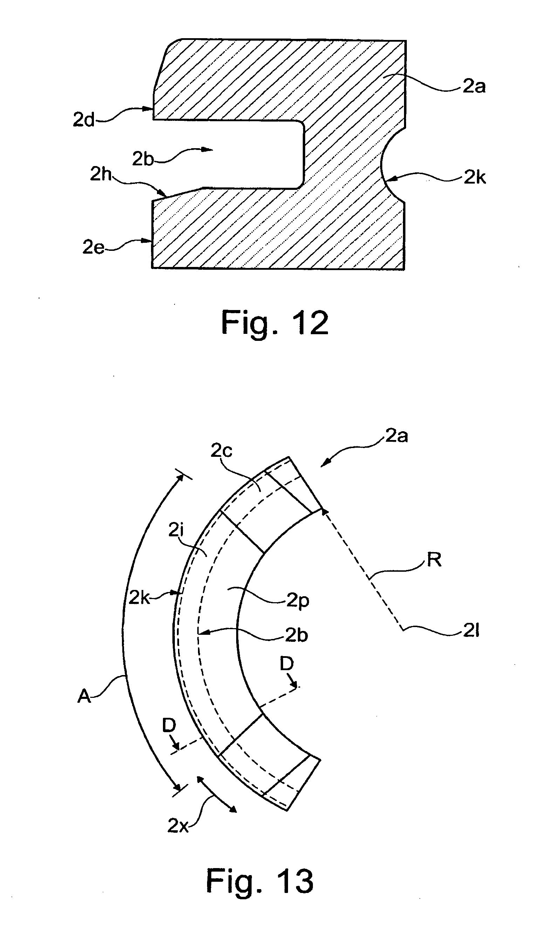

Figur 12 zeigt das Halteringsegment 2a mit dessen Nut 2b sowie der ersten und zweiten Stirnfläche 2d,2e nochmals im Detail. Das Halteringsegment 2a weist zudem eine Vertiefung 2k zur Aufnahme des Spannelementes 4 auf. Die Nut 2b weist im dargestellte Ausführungsbeispiel zum Zentrum 21 hin eine Erweiterung auf, indem die Nut 2b eine quer beziehungsweise schräg zur Oberfläche 6a der Kolbenstange 6 verlaufende Abstützfläche 2h aufweist, welche, wie in Figur 10 dargestellt, derart angeordnet und ausgestaltet ist, dass diese als Auflage für den Abstreifer 3 dient.

Figur 13 zeigt ein weiteres Ausführungsbeispiel eines Halteringsegmentes 2a, welches für einen in Figur 11 dargestellten Ölabstreifring 2 geeignet sein könnte. Das Halteringsegment 2a weist einen Innenradius R auf.

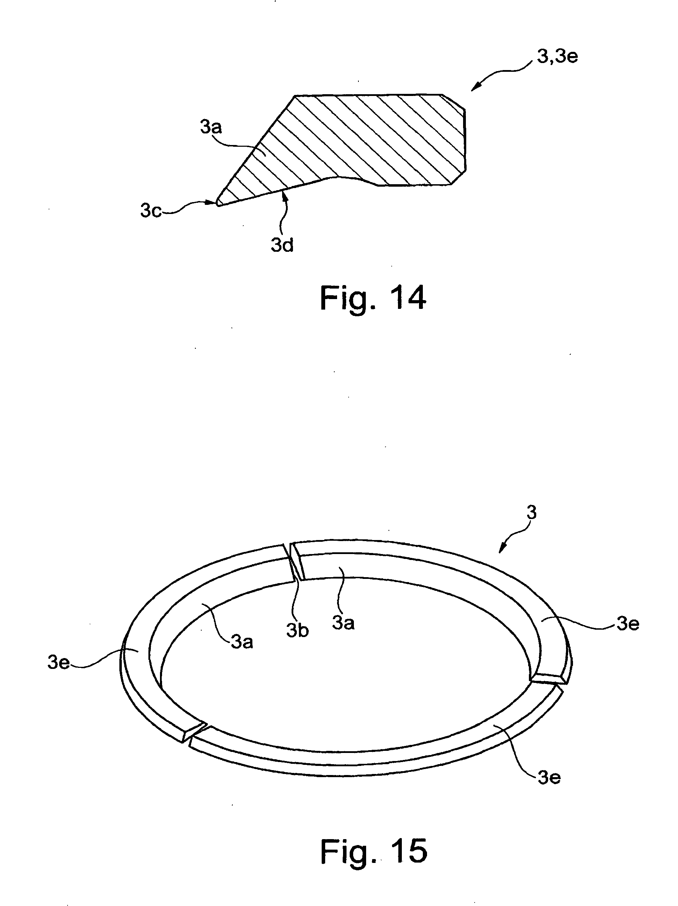

Figur 14 zeigt einen Schnitt durch das in Figur 10 dargestellte Abstreifringsegment 3e im Detail. Das Abstreifringsegment 3e umfasst eine Abstreiflamelle 3a, eine Auflagefläche 3d sowie eine Berührungsstelle 3c, welche zur Anlage an die Kolbenstange 6 bestimmt ist. Das Abstreifringsegment 3e besteht vorzugsweise aus Metall sodass die Berührungsstelle 3c vorzugsweise als scharfe Abreisskante ausgestaltet ist.

Figur 15 zeigt den bereits in Figur 10, 11 und 14 dargestellten Abstreifer 3 in perspektivischer Ansicht. Der erfindungsgemässe Ölabstreifring 2 weist den Vorteil auf, dass die Berührungsstelle 3c des Abstreifers 3 vorzugsweise keine oder eine nur geringe Kraft auf die Oberfläche 6a der Kolbenstange 6 bewirkt, da die durch die Feder 4 zum Zentrum 21 hin wirkenden Kräfte im Wesentlichen oder vollständig über die erste Stirnfläche 2d und die eventuell vorhandene zweite Stirnfläche 2e auf die Oberfläche 6a der Kolbenstange 6 übertragen werden. Der Abstreifer 3 kann somit derart ausgestaltet werden, dass dieser für eine möglichst hohe Abstreifwirkung optimiert ist. Insbesondere lässt sich der Querschnitt des Abstreifrings, beziehungsweise dessen Dimension in radialer und/oder axialer Richtung, auf ein Minimum reduzieren, woraus auch bei Verwendung eines Metalls eine gute Anpassung der einzelnen Segmente an die Kolbenstange 6 resultiert. Zur Aufrechterhaltung der Abstreifffunktion mit fortschreitendem Verschleiss besteht der Abstreifring aus mindestens zwei, vorzugsweise drei Segmenten 3e mit einem für den angestrebten Verschleiss dimensionierten Stoss 3b mit Spiel. Der Ölabstreifring 2 kann einteilig oder mehrteilig, vorzugsweise dreiteilig ausgestaltet sein und enthält ebenfalls einen Stoss 2g mit Spiel zur Verschleisskompensation. Zur Vermeidung von Ölleckagen durch die Stösse 2g,3b werden der Ölabstreifring 2 und der Abstreifer 3 derart angeordnet, dass sie sich gegenseitig die Stösse 2g,3b abdichten und somit in Verlaufsrichtung der Kolbenstange 6 keine durchgängigen Leckagepfade vorhanden sind. Dadurch wird auch bei fortschreitendem Verschleiss eine gute Abstreifwirkung sichergestellt.

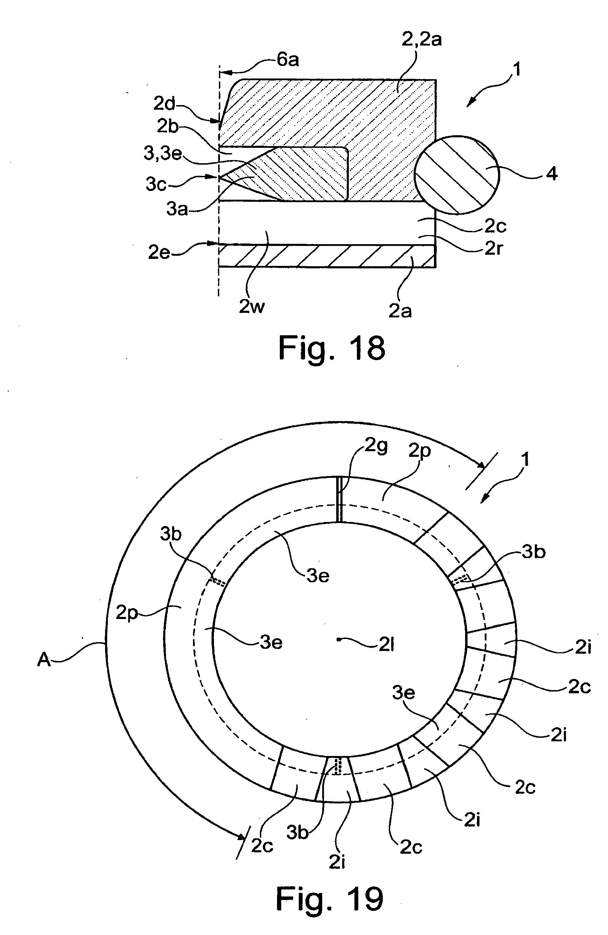

Figur 19 zeigt ein weiteres Ausführungsbeispiel eines Ölabstreifrings 2, der im Unterschied zu der in Figur 11 dargestellten Ausführungsform einstückig ausgestaltet ist, , mit einer einzigen Stossstelle 2g. Ansonsten ist der Ölabstreifring 2 wie in Figur 11 dargestellt ausgebildet und weist somit auch den in Figur 10 dargestellten Querschnitt auf.

Figur 18 zeigt in einem Schnitt ein weiteres Ausführungsbeispiel eines Ölabstreifrings 2, der im Unterschied zu der in Figur 10 dargestellten Ausführungsform keine Abstützfläche 2h aufweist, da der Abstreifer 3 spitzenförmig zum Zentrum 21 hin verläuft, und an dessen Spitze die Berührungsstelle 3c ausbildet. Der Kanal 2c kann, wie in Figur 18 beispielhaft dargestellt, auch als gedeckter Kanal 2r ausgestaltet sein, sodass der gedeckte Kanal 2r eine Durchtrittsöffnung ausbildet.

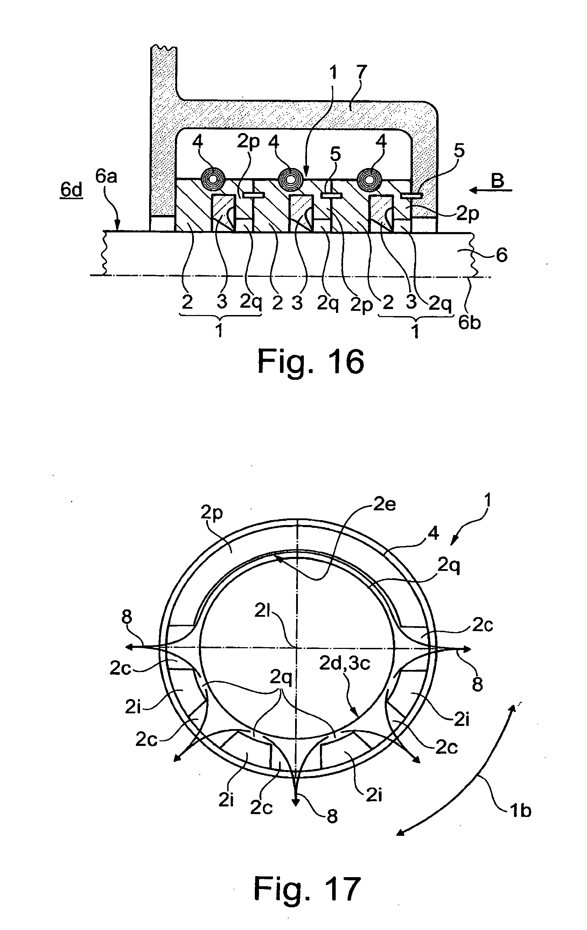

Figur 16 zeigt eine horizontal verlaufende Ölabstreifringpackung umfassend drei in Verlaufsrichtung der Kolbenstange 6 nacheinander folgend angeordnete Ölabstreifringe 2. Figur 17 zeigt eine Frontansicht aus Richtung B eines der in Figur 16 angeordneten Ölabstreifringe 2. Wie in Figur 17 dargestellt ist die zweite Stirnseite 2e, wie in Figur 10 strichliert dargestellt, zurückversetzt angeordnet, sodass sich zumindest zwischen dem langen Kronenteil 2p und der Oberfläche 6a der Kolbenstange 6 ein Zwischenraum 2q ausbildet. Die erste Stirnseite 2d sowie die Berührungsfläche 3c des Abstreifers 3 liegen an der Oberfläche 6a der Kolbenstange 6 an, sodass Öl abgestreift wird, welches, wie mit dem Fluidstrom 8 dargestellt, über die Kanäle 2c radial nach Aussen entweicht. Die Kanäle 2c sind unten in Umfangsrichtung 2x mindestens entlang eines Winkelbereichs von 60 Grad angeordnet, wobei zwischen zwei Kanälen 2c je ein Kronenteil 2i angeordnet ist. Vorteilhafterweise weist jeder Kanal 2c in Umfangsrichtung 2x eine Breite entsprechend einem Winkelbereich von mindestens 10 Grad auf, sodass sich jeder Kanal 2c in Umfangsrichtung 2x über einen Winkelbereich von mindestens 10 Grad erstreckt. Oben ist zwischen dem links und rechts angeordneten Kanal 2c ein zum Beispiel halbkreisförmiges langes Kronenteil 2p angeordnet, welches sich über einen Winkelbereich von mindestens 60 Grad erstreckt, wobei dieses lange Kronenteil 2p in Umfangsrichtung derart durchgehend ausgestaltet ist, dass das Kronenteil 2p keinen Durchlass aufweist. Diese Ausgestaltung weist den Vorteil auf, dass das abgestreifte Öl, wie mit dem Fluidstrom 8 dargestellt, nur nach unten entweichen kann, da der Ölabstreifring 1 gegen oben keinen durchgehenden Kanal 2c in radialer Richtung aufweist. In einer besonders vorteilhaften Ausgestaltung weisen benachbart angeordnete Ölabstreifringe 1 wie in Figur 16 dargestellt eine Verdrehsicherung auf, beispielsweise einen Fixierstift 5, um ein gegenseitiges Verdrehen der Ölabstreifringe 1 zu verhindern und um vorzugsweise auch ein Verdrehen der Ölabstreifringe 1 gegenüber dem Gehäuse 7 zu verhindern.

Der erfindungsgemässe Ölabstreifring 2 weist wie in Figur 16 und 17 dargestellt den Vorteil auf, dass die durch die Zwischenräume 2q ausgebildeten Drainagekanäle dem Abstreifer 3 aus Richtung B nicht nach- sondern vorgeschaltet sind, so dass sich zu einem Verdichtungskolben 6d hin eine plane in Umfangsrichtung durchgehende Fläche ausbildet. Diese Fläche wirkt als Dichtfläche und verhindert so das Austreten von Schmieröl in Verlaufsrichtung der Kolbenstange 6 aus dem jeweiligen Ölabstreifring 2. Darüber hinaus sind, wie in Figur 16 dargestellt, für den Einsatz in horizontaler Anordnung vorteilhafterweise keine Drainagekanäle in der Schwerkraft entgegen gesetzter Richtung angeordnet. Das abgestreifte Öl wird somit wie in Figur 17 dargestellt nur seitlich und nach unten abgeführt. Auf diese Art wird ein Umströmen der einzelnen Abstreifer 3 beziehungsweise der einzelnen Ölabstreifringe 2 verhindert. Vorteilhafterweise stellen zudem Fixierstifte 5 sicher, dass die Abstreifer 3 in der richtigen Position mit den abgedichteten Kanälen nach oben eingebaut werden.

Figur 19 zeigt eine Draufsicht auf ein weiteres Ausführungsbeispiel eines einstückigen Ölabstreifrings 2. Der in Figur 16 dargestellte Ölabstreifring 2 weist ein durchgehendes Kronenteil 2p auf, das sich über einen Winkelbereich A erstreckt, welcher sich über einen Winkel zwischen 60 Grad und 350 Grad erstrecken kann. Im dargestellten Ausführungsbeispiel verläuft die radial verlaufende Stossstelle 2g durch das Kronenteil 2p. Die Stossstelle 2g könnte jedoch auch derart angeordnet sein, dass diese nicht im Winkelbereich A angeordnet ist und daher nicht durch das Kronenteil 2p verläuft.

## Patentansprüche

1. Ölabstreifring (2) der sich in einer Umfangsrichtung (2x) um ein Zentrum (21) erstreckt und eine durch das Zentrum (21) verlaufende Längsachse (2m) aufweist, wobei der Ölabstreifring (2) eine gegen das Zentrum (21) hin ausgerichtete Stirnfläche (2d) aufweist, und wobei der Ölabstreifring (2) eine erste Seitenfläche (2s), eine zweite Seitenflächen (2t) sowie eine bezüglich dem Zentrum (21) abgewandte Aussenfläche (2u) aufweist, wobei der Ölabstreifring (2) an der ersten Seitenflächen (2s) eine Mehrzahl von zum Zentrum (21) hin verlaufenden Kanälen (2c) aufweist, welche in Umfangsrichtung (2x) gegenseitig beabstandet sind, und welche sich in radialer Richtung über die gesamte Breite der ersten Seitenfläche (2s) erstrecken und dadurch eine Fluid leitende Verbindung zwischen der Stirnfläche (2d) und der Aussenfläche (2u) ausbilden, und wobei jeweils zwischen zwei Kanälen (2c) ein sich in Umfangsrichtung (2x) erstreckendes Kronenteil (2i) angeordnet ist, wobei das Kronenteil (2i) in Verlaufsrichtung der Längsachse (2m) jeweils über den Kanal (2c) vorsteht und dabei für den Kanal (2c) eine Kanalseitenfläche (2w) ausbildet, **dadurch gekennzeichnet dass**,
zumindest eines der Kronenteile (5i) als langes Kronenteil (2p) ausgestaltet ist und sich in Umfangsrichtung (2x) über einen Winkelbereich (α) zwischen 60 Grad und 350 Grad erstreckt.

2. Ölabstreifring (2) nach Anspruch 1, **dadurch gekennzeichnet, dass** dieser eine Stossstelle (2g) aufweist.

3. Ölabstreifring (2) nach einem der vorhergehenden Ansprüche, **dadurch gekennzeichnet, dass** dieser aus zumindest zwei Ringsegmenten (2a) besteht, welche in Umfangsrichtung (2x) nacheinander folgend angeordnet sind und durch eine Stossstelle (2g) getrennt sind.

4. Ölabstreifring (2) nach einem der vorhergehenden Ansprüchen, **dadurch gekennzeichnet, dass** das lange Kronenteil (2p) bezüglich der Stirnfläche (2d) eine in radialer Richtung rückversetzte Stirnseite (2e) aufweist, um einen Zwischenraum (2q) zwischen der Stirnseite (2e) und einer an der Stirnflächen (2d) anliegenden Kolbenstange (6) auszubilden.

5. Ölabstreifring (2) nach einem der vorhergehenden Ansprüchen, umfassend zudem einen Abstreifer (3) mit einer Abstreiferlamelle (3a), wobei der Abstreifer (3) derart im Ölabstreifring (2) angeordnet ist, dass die Abstreiferlamelle (3a) gegen das Zentrum (21) des Ölabstreifrings (2) hin ausgerichtet ist, um Öl an einer Kolbenstange (6) abzustreifen, wobei der Abstreifer (3) aus einer Mehrzahl von Abstreifersegmenten (3e) besteht, welche in Umfangsrichtung (2x) des Ölabstreifrings (2) nacheinander folgend angeordnet sind, und wobei der Ölabstreifring (2) eine Nut (2b) zur formschlüssigen Aufnahme der Abstreifersegmente (3a) aufweist, und wobei der Ölabstreifring (2) eine Stossstelle (2g) aufweist, und wobei der Ölabstreifring (2) zumindest eine zum Zentrum (21) hin ausgerichtete Stirnfläche (2d) aus Kunststoff ausbildet, und wobei der Abstreifer (3) aus einem Material mit grösserer Härte als den die Stirnfläche (2d) ausbildenden Kunststoff besteht, wobei die Abstreiflamelle (3a) des Abstreifers (3) ein zum Zentrum (21) hin ausgerichteten Berührungsstelle (3c) aufweist, und wobei der Abstreifer (3) und der Ölabstreifring (2) derart gegenseitig angepasst ausgestaltet sind, dass sowohl die Stirnfläche (2d) als auch die Berührungsstelle (3c) an der Kolbenstange (6) anliegen können.

6. Ölabstreifring (2) nach Anspruch 5, **dadurch gekennzeichnet, dass** der Ölabstreifring (2) zwei Stirnflächen (2d, 2e) aufweist, die erste Stirnfläche (2d) und eine zweite Stirnfläche (2e), welche durch die in Umfangsrichtung verlaufende Nut (2b) gegenseitig getrennt sind.

7. Ölabstreifring (2) nach Anspruch 6, **dadurch gekennzeichnet, dass** die erste und die zweite Stirnfläche (2d, 2e) gleich weit zum Zentrum (21) des Ölabstreifrings (2) hin vorstehen.

8. Ölabstreifring (2) nach Anspruch 6, **dadurch gekennzeichnet, dass** die erste Stirnfläche (2d) weiter zum Zentrum (21) hin vorsteht als die zweite Stirnfläche (2e), sodass sich zwischen der zweiten Stirnfläche (2e) und der Oberfläche (6a) der Kolbenstange (6) ein Zwischenraum (2q) ausbildet.

9. Ölabstreifring (2) nach einem der Ansprüche 5 bis 8, **dadurch gekennzeichnet, dass** der Abstreifer (3) aus drei Abstreifsegmenten (3e) besteht, wobei zwischen in Umfangsrichtung (2x) benachbart angeordneten Abstreifsegmenten (3e) eine radial verlaufende Stossstelle (3b) ausgebildet ist.

10. Ölabstreifring (2) nach einem der Ansprüche 5 bis 9, **dadurch gekennzeichnet, dass** die Nut (2b) des Halterings (2) sich zum Zentrum (21) hin erweitert, derart, dass der Haltering (2) im Bereich der Nut (2b) eine quer zur Kolbenstange (6) verlaufende Abstützfläche (2h) aufweist.

11. Ölabstreifring (2) nach einem der vorhergehenden Ansprüche, **dadurch gekennzeichnet, dass** dieser aus zumindest einem ersten Ringteil (2y) und einem zweiten Ringteil (2z) besteht, dass das erste und zweite Ringteil (2y,2z) miteinander verbunden sind, dass das zweite Ringteil (2z) zwischen dem Zentrum (21) und dem ersten Ringteil (2y) angeordnet ist, dass das zweite Ringteil (2z) aus einem Kunststoff besteht, und dass das zweite Ringteil (2z) die Stirnfläche (2d) ausbildet.

12. Ölabstreifring (2) nach Anspruch 11, **dadurch gekennzeichnet, dass** das erste Ringteil (2y) aus Metall besteht.

13. Ölabstreifringpackung umfassend zumindest zwei Ölabstreifringe (2) nach einem der vorhergehenden Ansprüche, wobei die Ölabstreifringe (2) nebeneinander liegend und sich gegenseitig berührend angeordnet sind, wobei die Ölabstreifringe (2) insbesondere derart angeordnet sind, dass die langen Kronenteile (2p) gegenseitig identisch verlaufend angeordnet sind.

14. Ölabstreifringpackung nach Anspruch 13, **dadurch gekennzeichnet, dass** diese horizontal verlaufend angeordnet ist, und dass die Ölabstreifringe (2) derart in Umfangsrichtung (2x) gedreht angeordnet sind, dass die langen Kronenteile (2p) oben angeordnet sind.

15. Dichtungsanordnung umfassend eine Ölabstreifringpackung nach einem der Ansprüche 13 bis 14 sowie eine Kolbenstange (6), **dadurch gekennzeichnet, dass** die Kolbenstange (6) horizontal verläuft, dass die Ölabstreifringpackung zumindest zwei in Verlaufsrichtung (6b) der Kolbenstange (6) nebeneinander liegend angeordnete Ölabstreifringe (2) umfasst, und dass die langen Kronenteile (2p) der Ölabstreifringe (2) oberhalb der Kolbenstange (6) angeordnet sind.

## Claims

1. An oil scraper ring (2) which extends in a circumferential direction (2x) about a center (21) and which has a longitudinal axis (2m) extending through the center (21), wherein the oil scraper ring (2) has an end face (2d) oriented towards the center (21), and wherein the oil scraper ring (2) comprises a first side surface (2s), a second side surface (2t), as well as an outer surface (2u) facing away with respect to the center (21), wherein the oil scraper ring (2) has a plurality of passages (2c) extending towards the center (21) at the first side surface (2s), which passages are mutually spaced apart in the circumferential direction (2x) and which extend in the radial direction over the complete width of the first side surface (2s) and thereby form a fluid conducting connection between the end face (2d) and the outer surface (2u), and wherein a respective crown part (2i) extending in the circumferential direction (2x) is arranged between two passages (2c), wherein the crown part (2i) respectively projects over the passage (2c) in the direction of extent of the longitudinal axis (2m) and in this connection forms a passage side surface (2w) for the passage (2c), **characterised in that** at least one of the crown parts (5i) is configured as a long crown part (2p) and extends over an angular range (α) between 60 degrees and 350 degrees in the circumferential direction (2x).

2. An oil scraper ring (2) in accordance with claim 1, **characterized in that** this has an abutment position (2g).

3. An oil scraper ring (2) in accordance with one of the preceding claims, **characterized in that** this is composed of at least two ring segments (2a) which are arranged following one another in the circumferential direction (2x) and which are separated by an abutment position (2g).

4. An oil scraper ring (2) in accordance with any one of the preceding claims, **characterized in that** the long crown part (2p) has an end face (2e) recessed with respect to the end surface (2d) in the radial direction, in order to form an intermediate space (2q) between the end face (2e) and a piston rod (6) lying at the end surface (2d).

5. An oil scraper ring (2) in accordance with any one of the preceding claims, further comprising a scraper (3) having a scraper lip (3a), wherein the scraper (3) is arranged in the oil scraper ring (2) such that the scraper lip (3a) is oriented towards the center (21) of the oil scraper ring (2) in order to scrape oil at a piston rod (6), wherein the scraper (3) is composed of a plurality of scraper segments (3e) which are arranged following one another in the circumferential direction (2x) of the oil scraper ring (2); and wherein the oil scraper ring (2) has a groove (2b) for the form-fitted reception of the scraper segments (3a); and wherein the oil scraper ring (2) has an abutment position (2g); and wherein the oil scraper ring (2) has at least one first end face (2d) made of plastic oriented towards the center (21) of the oil scraper ring (2); and wherein the scraper (3) is composed of a material having a larger hardness than the plastic forming the first end face (2d), wherein the scraper lip (3a) of the scraper (3) has a contact position (3c) oriented towards the center (21); and wherein the scraper (3) and the oil scraper ring (2) are configured mutually adapted such that both the end face (2d) and also the contact position (3c) can lie at the piston rod (6).

6. An oil scraper ring (2) in accordance with claim 5, **characterized in that** the oil scraper ring (2) has two end faces (2d, 2e), the first end face (2d) and a second end face (2e) which are mutually separated by a groove (2b) running in the circumferential direction.

7. An oil scraper ring (2) in accordance with claim 6, **characterized in that** the first and the second end face (2d, 2e) project the same distance towards the center (21) of the oil scraper ring (1).

8. An oil scraper ring (2) in accordance with claim 6, **characterized in that** the first end face (2d) projects further towards the center (21) than the second end face (2e) such that an intermediate space (2q) is formed between the second end face (2e) and the surface (6a) of the piston rod (6).

9. An oil scraper ring (2) in accordance with any one of the preceding claims 5 to 8, **characterized in that** the scraper (3) is composed of three scraper segments (3e), wherein a radially running abutment position (3b) is formed between scraper segments (3e) arranged adjacent to one another in the circumferential direction (2x).

10. An oil scraper ring (2) in accordance with any one of the preceding claims 5 to 9, **characterized in that** the groove (2b) of the holding ring (2) expands towards the center (21) such that the holding ring (2) has a support surface (2h) in the region of the groove (2b) running transverse to the piston rod (6).

11. An oil scraper ring (2) in accordance with any one of the preceding claims, **characterized in that** this is composed of at least a first ring part (2y) and a second ring part (2z); **in that** the first and the second ring part (2y, 2z) are connected to one another; **in that** the second ring part (2z) is arranged between the center (21) and the first ring part (2y); **in that** the second ring part (2z) is composed of a plastic; and **in that** the second ring part (2z) forms the end face (2d).

12. An oil scraper ring (2) in accordance with claim 11, **characterized in that** the first ring part (2y) is composed of metal.

13. An oil scraper ring package comprising at least two oil scraper rings (2) in accordance with any one of the preceding claims, wherein the oil scraper rings (2) are arranged lying next to one another and mutually touching, wherein the oil scraper rings (2) are in particular arranged such that the long crown parts (2p) are arranged extending mutually identical.

14. An oil scraper ring package in accordance with claim 13, **characterized in that** this is arranged extending horizontally, and **in that** the oil scraper rings (2) are arranged rotated with respect to the circumferential direction (2x) such that the long crown parts (2p) are arranged at the top.

15. A sealing arrangement comprising an oil scraper ring package in accordance with any of the claims 13 to 14, as well as a piston rod (6), **characterized in that** the piston rod (6) extends horizontally, **in that** the oil scraper ring package comprises at least two oil scraper rings (2) arranged lying next to one another in the direction of extent of the piston rod (6); and **in that** the long crown parts (2p) of the oil scraper rings 82) are arranged above the piston rod (6).

## Revendications

1. Bague de grattage d'huile (2) qui s'étend dans une direction périphérique (2x) autour d'un centre (21) et qui présente un axe longitudinal (2m) s'étendant à travers le centre (21), la bague de grattage d'huile (2) présentant une face frontale (2d) orientée vers le centre (21), et la bague de grattage d'huile (2) présentant une première face latérale (2s), une deuxième face latérale (2t) ainsi qu'une face extérieure (2u) éloignée par rapport au centre (21), la bague de grattage d'huile (2) présentant, au niveau de la première face latérale (2s), une pluralité de canaux (2c) s'étendant vers le centre (21), qui sont espacés mutuellement dans la direction périphérique (2x) et qui s'étendent dans la direction radiale sur toute la largeur de la première face latérale (2s) et constituent ainsi une connexion conduisant des fluides entre la face frontale (2d) et la face extérieure (2u), et une partie de couronne (2i) s'étendant dans la direction périphérique (2x) étant à chaque fois disposée entre deux canaux (2c), la partie de couronne (2i) faisant saillie dans la direction d'étendue de l'axe longitudinal (2m) à chaque fois au-delà du canal (2c) et constituant en l'occurrence une face latérale de canal (2w) pour le canal (2c),
**caractérisée en ce qu'**au moins l'une des parties de couronne (5i) est réalisée sous forme de partie de couronne allongée (2p) et s'étend dans la direction périphérique (2x) sur une plage angulaire (α) entre 60 et 350 degrés.

2. Bague de grattage d'huile (2) selon la revendication 1, **caractérisée en ce que** celle-ci présente une zone de joint (2g).

3. Bague de grattage d'huile (2) selon l'une quelconque des revendications précédentes, **caractérisée en ce que** celle-ci se compose d'au moins deux segments annulaires (2a) qui sont disposés l'un derrière l'autre dans la direction périphérique (2x) et qui sont séparés par une zone de joint (2g).

4. Bague de grattage d'huile (2) selon l'une quelconque des revendications précédentes, **caractérisée en ce que** la partie de couronne allongée (2p) présente par rapport à la face frontale (2d) un côté frontal (2e) en retrait dans la direction radiale afin de constituer un espace intermédiaire (2q) entre le côté frontal (2e) et une tige de piston (6) s'appliquant contre la face frontale (2d).

5. Bague de grattage d'huile (2) selon l'une quelconque des revendications précédentes, comprenant en outre un racloir (3) avec une lamelle de raclage (3a), le racloir (3) étant disposé dans la bague de grattage d'huile (2) de telle sorte que la lamelle de raclage (3a) soit orientée vers le centre (21) de la bague de grattage d'huile (2), afin de racler de l'huile au niveau d'une tige de piston (6), le racloir (3) se composant d'une pluralité de segments de racloir (3e) qui sont disposés les uns derrière les autres dans la direction périphérique (2x) de la bague de grattage d'huile (2), et la bague de grattage d'huile (2) présentant une rainure (2b) pour recevoir par engagement par correspondance de forme les segments de racloir (3a), et la bague de grattage d'huile (2) présentant une zone de joint (2g), et la bague de grattage d'huile (2) constituant au moins une face frontale (2d) en plastique orientée vers le centre (21), et le racloir (3) étant constitué d'un matériau de plus grande dureté que le plastique formant la face frontale (2d), la lamelle de raclage (3a) du racloir (3) présentant une zone de contact (3c) orientée vers le centre (21), et le racloir (3) et la bague de grattage d'huile (2) étant configurés de manière adaptée l'un à l'autre de telle sorte que la face frontale (2d) ainsi que la zone de contact (3c) puissent s'appliquer contre la tige de piston (6).

6. Bague de grattage d'huile (2) selon la revendication 5, **caractérisée en ce que** la bague de grattage d'huile (2) présente deux faces frontales (2d, 2e), la première face frontale (2d) et une deuxième face frontale (2e), qui sont séparées l'une de l'autre par la rainure (2b) s'étendant dans la direction périphérique.

7. Bague de grattage d'huile (2) selon la revendication 6, **caractérisée en ce que** la première et la deuxième face frontale (2d, 2e) font saillie sur la même distance vers le centre (21) de la bague de grattage d'huile (2).

8. Bague de grattage d'huile (2) selon la revendication 6, **caractérisée en ce que** la première face frontale (2d) fait plus saillie vers le centre (21) que la deuxième face frontale (2e) de telle sorte qu'entre la deuxième face frontale (2e) et la surface (6a) de la tige de piston (6) se constitue un espace intermédiaire (2q).

9. Bague de grattage d'huile (2) selon l'une quelconque des revendications 5 à 8, **caractérisée en ce que** le racloir (3) se compose de trois segments de racloir (3e), une zone de joint (3b) s'étendant radialement étant réalisée entre des segments de racloir (3e) disposés de manière adjacente dans la direction périphérique (2x).

10. Bague de grattage d'huile (2) selon l'une quelconque des revendications 5 à 9, **caractérisée en ce que** la rainure (2b) de la bague de retenue (2) s'élargit vers le centre (21) de telle sorte que la bague de retenue (2) présente, dans la région de la rainure (2b), une face d'appui (2h) s'étendant transversalement par rapport à la tige de piston (6).

11. Bague de grattage d'huile (2) selon l'une quelconque des revendications précédentes, **caractérisée en ce que** celle-ci se compose d'au moins une première partie annulaire (2y) et d'une deuxième partie annulaire (2z), **en ce que** la première et la deuxième partie annulaire (2y, 2z) sont connectées l'une à l'autre, **en ce que** la deuxième partie annulaire (2z) est disposée entre le centre (21) et la première partie annulaire (2y), **en ce que** la deuxième partie annulaire (2z) se compose de plastique et **en ce que** la deuxième partie annulaire (2z) constitue la face frontale (2d).

12. Bague de grattage d'huile (2) selon la revendication 11, **caractérisée en ce que** la première partie annulaire (2y) se compose de métal.

13. Garniture de bague de grattage d'huile comprenant au moins deux bagues de grattage d'huile (2) selon l'une quelconque des revendications précédentes, dans laquelle les bagues de grattage d'huile (2) sont disposées l'une à côté de l'autre et en contact l'une avec l'autre, les bagues de grattage d'huile (2) étant notamment disposées de telle sorte que les parties de couronne allongées (2p) soient disposées de manière à s'étendre de manière identique les unes par rapport aux autres.

14. Garniture de bague de grattage d'huile selon la revendication 13, **caractérisée en ce que** celle-ci est disposée de manière à s'étendre horizontalement et **en ce que** les bagues de grattage d'huile (2) sont disposées de manière tournée dans la direction périphérique (2x) de telle sorte que les parties de couronne allongées (2p) soient disposées en haut.

15. Agencement d'étanchéité comprenant une garniture de bague de grattage d'huile selon l'une quelconque des revendications 13 à 14, ainsi qu'une tige de piston (6), **caractérisé en ce que** la tige de piston (6) s'étend horizontalement, **en ce que** la garniture de bague de grattage d'huile comprend au moins deux bagues de grattage d'huile (2) disposées les unes à côté des autres dans la direction d'étendue (6b) de la tige de piston (6), et **en ce que** les parties de couronne allongées (2p) des bagues de grattage d'huile (2) sont disposées au-dessus de la tige de piston (6).
